(19) Europäisches Patentamt
European Patent Office
Office européen des brevets

(11) EP 3 750 627 B1

(12) EUROPÄISCHE PATENTSCHRIFT

(45) Veröffentlichungstag und Bekanntmachung des Hinweises auf die Patenterteilung:
**03.01.2024 Patentblatt 2024/01**

(21) Anmeldenummer: **20178709.0**

(22) Anmeldetag: **08.06.2020**

(51) Internationale Patentklassifikation (IPC):
***B01J 31/40*** *(2006.01)* ***B01J 31/18*** *(2006.01)*

(52) Gemeinsame Patentklassifikation (CPC):
**B01J 31/185; B01J 31/40; B01J 31/4061;**
B01J 2231/321; B01J 2531/824

# (54) VERFAHREN ZUR ABTRENNUNG VON EINER ODER MEHREREN KOMPONENTE(N) AUS EINEM GEMISCH

METHOD FOR THE SEPARATION OF ONE OR MORE COMPONENTS FROM A MIXTURE

PROCÉDÉ DE SÉPARATION D'AU MOINS UN COMPOSANT D'UN MÉLANGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2019 EP 19179573**

(43) Veröffentlichungstag der Anmeldung:
**16.12.2020 Patentblatt 2020/51**

(73) Patentinhaber: **Evonik Oxeno GmbH & Co. KG**
**45772 Marl (DE)**

(72) Erfinder:
- **KUCMIERCZYK, Peter**
  **44652 Herne (DE)**
- **FRANKE, Robert**
  **45772 Marl (DE)**
- **FRIDAG, Dirk**
  **45721 Haltern am See (DE)**
- **KNOSSALLA, Johannes**
  **46514 Schermbeck (DE)**
- **SCHÄPERTÖNS, Marc**
  **45657 Recklinghausen (DE)**
- **GLUTH, Frederik**
  **45472 Mülheim an der Ruhr (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A2- 0 823 282**
**WO-A1-2013/107902**
**DE-A1-102009 001 230**
**US-A- 5 786 517**
**US-A- 5 789 625**

- **Jens M. Dreimann ET AL: "Merging Thermomorphic Solvent Systems and Organic Solvent Nanofiltration for Hybrid Catalyst Recovery in a Hydroformylation Process", Industrial & Engineering Chemistry Research, vol. 56, no. 5, 8 February 2017 (2017-02-08), pages 1354-1359, XP055651212, ISSN: 0888-5885, DOI: 10.1021/acs.iecr.6b04249**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Abtrennung von einer oder mehreren Komponente(n) aus einem Gemisch mittels einer Membrantrennung, wobei dem Gemisch vor der Membrantrennung in Abhängigkeit von der abzutrennenden Komponente eine Säure hinzugefügt wird.

Membrantrennverfahren sind im Stand der Technik hinlänglich bekannt und werden heutzutage in vielen industriellen Bereichen eingesetzt, beispielsweise zur Rückgewinnung homogener Katalysatorsysteme. Grundsätzlich besteht ein ständiger Bedarf nach Verbesserungen der Membraneigenschaften, wie dem Rückhalt oder der Permeabilität der Membran. Typischerweise wird dabei auf das Membranmaterial abgestellt, was durch Modifikation zu den gewünschten Verbesserungen führen soll, was jedoch in nachteiliger Weise oft mit einem hohen Arbeits- und Entwicklungsaufwand verknüpft ist.

Zur Reduktion des Arbeits- und Entwicklungsaufwands wurde vorgeschlagen, die Trenneigenschaften durch die gezielte Zugabe von aromatischen Lösungsmitteln zu verbessern. Aus der DE 10 2013 107 911 A1 ist nämlich ein Membrantrennverfahren bekannt, bei dem unter Verwendung einer sogenannten organophilen Nanofiltrations (oNF)-Membran eine Verbesserung des Rückhalts und/oder der Permeabilität dadurch erreicht werden konnte, dass mindestens 5 Gew.-% eines aromatischen Lösemittels zu einem Gemisch hinzugefügt wurde, aus dem dann mittels Membrantrennung eine Komponente abgetrennt wurde. Das dort eingesetzte aromatische Lösemittel ist insbesondere Toluol.

Nachteilig an dem dort beschriebenen Verfahren ist, dass eine nicht unerhebliche Menge an Lösungsmittel hinzugegeben werden muss. Dabei kann nicht ausgeschlossen werden, dass die erhöhte Konzentration von Lösungsmitteln, wie in diesem Fall ein zusätzliches aromatisches Lösungsmittel wie Toluol, die abzutrennende Komponente beeinflusst. Ein weiteres Problem ist, dass das Lösungsmittel an sich keine systemimmanente Komponente ist und dadurch zusätzliche Aufreinigungsschritte notwendig werden könnten.

Die WO 2013/107902 A1 offenbart ein Verfahren zur Abtrennung eines homogenen Katalysatorsystems aus einer durch eine Alkoxycarbonylierung erhaltenen Reaktionslösung mittels Membrantrennung. Mit der eingesetzten Membran werden Moleküle mit einem Molekulargewicht von 1 kDa oder mehr abgetrennt. Das aus der Membrantrennung erhaltene Retentat weist eine höhere Konzentration des gelösten Katalysatorsystems als das Permeat.

Weiterhin ist es das Ziel, besonders im Fall der homogenen Katalyse, den Retentatstom, der die abzutrennende Komponente enthält, in die Reaktionszone zurückzuführen. Durch erhöhte Mengen an zusätzlichem aromatischen Lösungsmittel wird ein nicht unerheblicher Anteil davon ebenfalls durch die Membran zurückgehalten und gelangt mit über den Retentatstrom in den Reaktor. Durch die Anwesenheit einer erhöhten Menge an Lösungsmittel ist eine Beeinträchtigung der Reaktionsbedingungen nicht ausgeschlossen. Auch eine erhöhte Nebenproduktbildung ist nicht ausgeschlossen. Selbst bei ausbleibender Nebenproduktbildung reduziert das zusätzliche Lösungsmittel die Raumzeitausbeute im Reaktor (in Abhängigkeit von der zugegebenen Menge).

Die daraus resultierende Aufgabe der vorliegenden Erfindung war die Bereitstellung eines Verfahrens zur Abtrennung von einer oder mehreren Komponente(n) aus einem Gemisch mittels einer Membrantrennung, welches die vorgenannten Nachteile nicht aufweist. Weiterhin war die Aufgabe ein Membrantrennverfahren bereitzustellen, bei dem die Zugabe der zusätzlichen Komponente auf ein Mindestmaß reduziert werden kann, sodass durch die Rückführung des Retentatstroms weder Raumzeitausbeuten noch Nebenproduktbildungsraten oder Reaktionsbedingungen merklich beeinflusst werden, um die Wirtschaftlichkeit des Verfahrens nicht zu gefährden.

Die zugrundeliegende Aufgabe der vorliegenden Erfindung konnte durch Verfahren nach Anspruch 1 gelöst werden. Bevorzugte Ausführungsformen sind in den Unteransprüchen angegeben.

Das erfindungsgemäße Verfahren ist ein Verfahren zur Abtrennung eines homogenen Katalysatorsystems, welches zumindest ein Metall der Gruppe 8 bis 10 des Periodensystems der Elemente oder einer Verbindung davon und einen phosphorhaltigen Liganden umfasst, aus eine Reaktionslösung mittels einer Membrantrennung, wodurch das homogene Katalysatorsystem im resultierenden Permeatstrom abgereichert und im resultierenden Retentatstrom angereichert wird, wobei

mindestens eine Komponente des homogenen Katalysatorsystems mindestens eine basische funktionelle Gruppe umfasst, dadurch gekennzeichnet, dass

die Reaktionslösung vor der Membrantrennung, für den Fall, dass die mindestens eine abzutrennende Komponente eine basische funktionelle Gruppe aufweist, eine Säure in einer Menge von ≥ 0,1 Gew.-%, vorzugsweise in einer Menge von ≥ 0,1 Gew.-% und < 5 Gew.-%, bezogen auf das Gesamtgewicht des Gemisches enthält.

Die Membrantrennung beruht auf der Semipermeabilität des Membranmaterials, welches für bestimmte Stoffe durchlässig und für andere Stoffe undurchlässig ist. Üblicherweise erfolgt die Trennung über das Molekulargewicht. Im vorliegenden Fall können Komponenten mit einem Molekulargewicht von 0,1 bis 1 kDa voneinander oder von anderen

niedermolekularen Komponenten im Gemisch getrennt werden. Dabei werden die Komponenten, die ein Molekulargewicht über einem durch die Membran definierten Wert aufweisen, im Retentat angereichert, während alle niedermolekularen Komponenten im Permeat angereichert werden. Je nach Molekulargewicht der abzutrennenden Komponente(n) wird sich diese Komponente entweder im Permeat oder im Retentat anreichern. Bevorzugt werden die abzutrennende(n) Komponente(n) im erfindungsgemäßen Verfahren im Rentenat angereichert.

Im erfindungsgemäßen Verfahren kann grundsätzlich jedes geeignete Membranmaterial eingesetzt werden. Aufgrund der erfindungsgemäßen Zugabe von Säure zum Gemisch sollte die Membran jedoch zumindest säurestabil sein bzw. zumindest gegenüber den eingesetzten Säuren oder Basen stabil sein. Der Begriff "säurestabil" meint im Rahmen der vorliegenden Erfindung, dass das Membranmaterial mindestens 300 h in Anwesenheit der Säure, insbesondere einer Brönsted-Säure mit einem pKs ≤ 5, besonders bevorzugt mit einem pKs ≤ 3 stabil ist und nicht zerstört wird, wodurch die eigentliche Trennwirkung nicht mehr erzielt werden könnte Ein solches Membranmaterial besteht vorzugsweise zumindest aus einer eher dünnen trennaktiven Schicht (auch: aktiven Trennschicht) und optional einem dickeren Backing, worauf sich die trennaktive Schicht befindet. Bevorzugt besteht das erfindungsgemäße Membranmaterial zumindest aus einer trennaktiven Schicht und einem Backing. Zwischen trennaktiver Schicht und Backing können eine oder mehrere Zwischenschichten vorhanden sein. In einer bevorzugten Ausführungsform besteht das Membranmaterial nur aus der trennaktiven Schicht und dem Backing.

Das Membranmaterial umfasst als trennaktive Schicht vorzugsweise ein polymerbasiertes Material, welches aus der Gruppe, bestehend aus Polyimid (PI), Polydimethylsiloxan (PDMS), Polyetherimid (PEI), Poly(2,6-dimethyl-1 ,4-phenyleneoxid (PPO), Polyvinylalkohol (PVA), Polyacrylsäure (PAA), Polyurethane (PU), Poly(1-trimethylsilyl-1-propyne) (PTMSP), Polybenzimidazole (PBI), Polydicyclopentadiene (pDCPD), Polyaryletherketonen (PAEK), beispielsweise Polyethertherketon (PEEK), und Mischungen dieser Materialien, ausgewählt ist.

Das Backing weist insbesondere eine poröse Struktur auf, die für das durch die trennaktive Schicht gelangte Permeat durchlässig ist. Das Backing hat eine stabilisierende Funktion und dient als Träger für die trennaktiven Schicht. Das Backing kann grundsätzlich aus jedem geeigneten porösen Material bestehen. Voraussetzung ist jedoch, dass das Material säurestabil ist. Das Backing kann auch aus dem gleichen Material bestehen wie die trennaktive Schicht.

Die erfindungsgemäße trennaktive Schicht besteht vorzugsweise aus einem PAEK-Polymer (Polyaryletherketon). PAEK zeichnet sich dadurch aus, dass innerhalb der Widerholungseinheit Arylgruppen abwechselnd über eine Etherfunktionalität und eine Ketonfunktionalität verknüpft sind. Eine erfindungsgemäß bevorzugte trennaktive Schicht besteht aus PEEK (Polyetheretherketon). Als trennaktive Schicht können insbesondere bevorzugt PEEK-Polymere mit einem Sulfonierungsgrad von weniger als 20%, besonders bevorzugt mit einem Sulfonierungsgrad von weniger als 10% eingesetzt werden. Die entsprechenden PEEK-Polymere und deren Herstellung sind in der WO 2015/110843 A1 oder in J. da Silva Burgal et al.; Journal of Membrane Science, Vol. 479 (2015), S. 105-116 beschrieben. Es hat sich überraschend gezeigt, dass dieses Material besonders stabil ist, insbesondere auch gegenüber der Säure. Außerdem zeichnet sich das erfindungsgemäße PEEK-Material dadurch aus, dass es als trennaktive Schicht eingesetzt bevorzugt die gebildeten Ester durchlässt, während selbst die eingesetzten Eduktalkohole zumindest teilweise zurückgehalten werden und sich dadurch im Retentat anreichern. Dadurch kann die nachfolgende Aufarbeitung des restlichen Produktgemisches wirtschaftlicher und nachhaltiger betrieben werden, weil verglichen mit bekannten Membranmaterialien weniger Alkohole abgetrennt werden müssen.

Alternativ kann das Membranmaterial für das erfindungsgemäße Verfahren auch ein keramisches Membranmaterial sein. Geeignete keramische Membranmaterialien sind beispielsweise Aluminiumoxid, $SiO_2$, TiOz, $ZrÜ_2$ oder Mischungen dieser Materialien, aus denen das keramische Membranmaterial vorzugsweise besteht. Die keramischen Membranmaterialien können auch eine Funktionalisierung, beispielsweise eine Oberflächenmodifizierung, umfassen bzw. aufweisen. Diese Membranmaterialien können rein keramisch sein und aus den genannten Materialien bestehen. Andererseits können die oben genannten keramischen Materialien auch den Grundkörper bzw. das Backing bilden, auf den eine trennaktive Schicht aus den oben genannten Polymermaterialien aufgebracht wird.

Die Membrantrennung, also insbesondere der Aufbau der entsprechenden Anlage(n) und die Eigenschaften wie Druck und Temperatur hängen von dem verwendeten Gemisch und der oder den daraus abzutrennende(n) Komponente(n) ab. Grundsätzlich sind diese Parameter dem Fachmann bekannt. Das erfindungsgemäße Membrantrennungsverfahren kann dabei sowohl einstufig als auch mehrstufig durchgeführt werden.

Die Membrantrennung wird vorzugsweise bei Temperaturen zwischen 25 und 100°C, weiterhin bevorzugt zwischen 30 und 80°C und besonders bevorzugt zwischen 40 und 70°C durchgeführt. Um das Gemisch auf die bei der Membrantrennung bevorzugte vorherrschende Temperatur zu bringen, kann das Gemisch gekühlt werden. Neben einer aktiven Kühlung unter Verwendung eines Kühlmediums, kann die Kühlung auch über einen Wärmetauscher erreicht werden, wodurch ein anderer Strom innerhalb des erfindungsgemäßen Verfahrens erhitzt wird. Optional ist auch ein Degasingschritt zwischen der Reaktion und der Membrantrennung vorhanden, um vorher leicht flüchtige Verbindungen aus dem Gemisch zu entfernen. Dabei wird das Gemisch erst unter den Partialdruck der gelösten Komponenten entspannt, so dass diese ausgasen, um dann wieder den Druck zu erhöhen, der für die Membrantrennung vorgesehen ist.

Der Transmembrandruck (TMP) kann bei der Membrantrennung 10 bis 60 bar, vorzugsweise 15 bis 55 bar,

besonders bevorzugt 20 bis 50 bar betragen (relativ). Der permeatseitige Druck kann dabei oberhalb des atmosphärischen Drucks bis 15 bar, vorzugsweise 3 bis 7 bar betragen, woraus sich anhand des TMP dann der retentaseitige Druck ergibt. In einer bevorzugten Ausführungsform sollte bei den Druckverhältnissen und insbesondere beim permeatseitigen Druck darauf geachtet werden, dass der Druck in Abhängigkeit von den Komponenten im Gemisch und der vorhandenen Temperatur eingestellt wird, um eine Verdampfung nach dem Durchtritt durch die Membran zu vermeiden, da dadurch die gesamte Fahrweise instabil werden könnte. Gleiches gilt grundsätzlich auch für gelöste, beispielsweise gasförmige Komponenten die optional durch den bereits genannten Degasingschritt entfernt werden können.

In der Membrantechnik wird zur Charakterisierung der Durchlässigkeit bzw. der Trennleistung einer Membran der Rückhalt R der Membran hinsichtlich einer bestimmten Komponente des Stoffgemisches gemäß nachfolgender Formel (1) definiert:

$$R = 1 - w_{(I)P} / w_{(I)R} \qquad (1),$$

worin $w_{(I)P}$ für den Massenanteil der betrachteten Komponente im Permeat und $w_{(I)R}$ für den Massenanteil der betrachteten Komponente im Retentat der Membran steht. Der Rückhalt kann somit Werte von 0 bis 1 annehmen und wird deswegen gerne in % angegeben. Ein Rückhalt von 0 % bedeutet, dass die betrachtete Komponente ungehindert durch die Membran permeiert, sodass die Massenanteile der Komponenten im Retentat wie im Permeat gleich sind. Andererseits bedeutet ein Rückhalt von 100 %, dass die betrachtete Komponente vollständig von der Membran zurückgehalten wird, was sich technisch jedoch kaum realisieren lässt.

Neben dem Rückhalt ist auch die sogenannte Permeabilität der Membran für die Charakterisierung ihrer Durchlässigkeit gemäß der nachfolgenden Formel (2) maßgeblich:

$$P = m' / A * TMP \qquad (2),$$

worin m' für den Massenstrom des Permeats, A für die Fläche der Membran und TMP für den angelegten Transmembrandruck steht. Angegeben wird die Permeabilität in der Regel in der Einheit kg /(h * $m^2$ * bar).

Im Hinblick auf die Charakterisierung der Stabilität einer Membran kann eine relative Änderung der Permeabilität $P_{Rel}$ gemäß der nachfolgenden Formel (3) definiert werden:

$$P_{Rel} = P_{t=x} / P_{t=0} \qquad (3),$$

worin $P_{t=x}$ für die Permeabilität zum Zeitpunkt t=x und $P_{t=0}$ für die ursprüngliche Permeabilität zum Zeitpunkt t=0 (möglich ist auch ein anderer zeitlicher Bezugspunkt, mit der Maßgabe, dass t=x > t=y) steht.

Das erfindungsgemäße Verfahren zur Membranabtrennung zeichnet sich dadurch aus, dass dem Gemisch, welches die abzutrennende(n) Komponente(n) enthält, eine Säure in einer Menge von ≥ 0,1 Gew.-%, bezogen auf das Gesamtgewicht des Gemisches, hinzugefügt wird. Zu dem Gemisch wird in dem Fall eine Säure hinzugefügt, wenn die abzutrennende(n) Komponente(n) mindestens eine basische funktionelle Gruppe enthält. Vorzugsweise ist die Menge an Säure auf eine Menge von < 5 Gew.-% begrenzt, um keinen zu hohen Anteil systemimmanenter Komponenten einzutragen und um das Gemisch nicht in unzumutbarer Weise zu verdünnen.

Für den Fall, dass dem Gemisch eine Säure hinzugefügt wird, kann es sich bei der Säure um eine Brönsted- oder Lewis-Säure handeln. Geeignete Brönsted-Säuren sind Perchlorsäure, Schwefelsäure, Phosphorsäure, Methylphosphonsäure oder eine Sulfonsäure, beispielsweise Methansulfonsäure, Trifluormethansulfonsäure, tert-Butansulfonsäure, p-Toluolsulfonsäure(pTSA), 2-Hydroxypropan-2-sulfonsäure, 2,4,6-Trimethylbenzolsulfonsäure oder Dodecylsulfonsäure. Vorzugsweise werden Schwefelsäure oder eine Sulfonsäure als Brönsted-Säure eingesetzt, besonders bevorzugt Schwefelsäure. Geeignete Lewis-Säuren sind Titan(IV)-isopropoxid, $Bu_2SnO$, BuSn(O)OH, Aluminiumtriflat, Aluminiumchlorid, Aluminiumhydrid, Trimethylaluminium, Tris(pentafluorophenyl)boran, Bortrifluorid, Bortrichlorid oder Mischungen davon. Bevorzugt eingesetzte Lewis-Säuren sind Titan(IV)-isopropoxid, und Aluminiumtriflat

Die abzutrennende Komponente ist in der vorliegenden Erfindung ein homogenes Katalysatorsystem, die aus der Reaktionslösung abgetrennt werden soll. Die Reaktionslösung entstammt einer Hydroformylierung oder eine Alkoxycarbonylierung.

Die Alkoxycarbonylierung meint die üblicherweise homogen katalysierte Umsetzung eines Kohlenwasserstoffs mit mindestens eine olefinische Doppelbindung aufweist, mit Kohlenmonoxid und einem Alkohol zu einem Ester. Die Hydroformylierung meint die üblicherweise homogen katalysierte Umsetzung eines Kohlenwasserstoffs, der mindestens eine Mehrfachbindung, vorzugsweise mindestens eine olefinische Doppelbindung aufweist, mit Synthesegas (Mischung aus CO und $H_2$) zu einem Aldehyd.

Sowohl bei der Alkoxycarbonylierung, als auch bei der Hydroformylierung wird ein Kohlenwasserstoff mit mindestens einer Mehrfachbindung eingesetzt, insbesondere Kohlenwasserstoffe mit einer olefinischen Doppelbindung. Grundsätzlich ist die Anzahl der Kohlenstoffatome von Verbindung, die mindestens eine Mehrfachbindung, vorzugsweise mindestens eine olefinische Doppelbindung aufweisen, nicht begrenzt. Bevorzugt sind C2- bis C20-Kohlenwasserstoffen und mit mindestens einer olefinischen Doppelbindung. In einer bevorzugten Ausführungsform der vorliegenden Erfindung können C3- bis C16-Kohlenwasserstoffe, besonders bevorzugt C3- bis C12-Kohlenwasserstoffe mit mindestens einer Mehrfachbindung, vorzugsweise mindestens einer olefinischen Doppelbindung eingesetzt werden. Darunter fallen insbesondere n-Alkene, iso-Alkene, Cycloalkene und aromatische Alkene mit 2 bis 20 Kohlenstoffatomen, vorzugsweise 3 bis 16 Kohlenstoffatomen, besonders bevorzugt 3 bis 12 Kohlenstoffatomen.

Die vorgenannt beschriebenen Kohlenwasserstoffe können zusätzlich zu der mindestens einen olefinischen Doppelbindungen eine oder mehrere weitere funktionelle Gruppen enthalten. Beispiele für geeignete funktionelle Gruppen sind Carboxyl-, Thiocarboxyl-, Sulfo-, Sulfinyl-, Carbonsäureanhydrid-, Imid-, Carbonsäureester-, Sulfonsäureester-, Carbamoyl-, Sulfamoyl-, Cyano-, Carbonyl-, Carbonothioyl-, Hydroxyl-, Sulfhydryl-, Amino-, Ether-, Thioether-, Aryl-, Heteroaryl- oder Silylgruppen und/oder Halogensubstituenten.

Besonders bevorzugte Kohlenwasserstoffe, die bei der Hydroformylierung oder der Alkoxycarbonylierung eingesetzt werden, weisen nur eine olefinische Doppelbindung auf, insbesondere n-Alkene und iso-Alkene mit 2 bis 20 Kohlenstoffatomen, vorzugsweise 3 bis 16 Kohlenstoffatomen, besonders bevorzugt 3 bis 12 Kohlenstoffatomen. Die eingesetzten Kohlenwasserstoffe sind vorzugsweise unsubtituiert.

Der bei der Alkoxycarbonylierung eingesetzte Alkohol ist ein Mono- oder Polyalkohol (zwei oder mehr OH-Gruppe) mit 1 bis 50 Kohlenstoffatomen, vorzugsweise 1 bis 15 Kohlenstoffatomen, besonders bevorzugt 1 bis 10 Kohlenstoffatomen oder eine Mischung aus zwei oder mehr Mono- und/oder Polyalkoholen. In einer bevorzugten Ausführungsform ist der Polyalkohol ein Diol, Triol oder Tetrol, vorzugsweise ein Diol oder Triol mit der vorgenannten Anzahl an Kohlenstoffatomen. Geeignete Alkohole für die Alkoxycarbonylierung sind Methanol, Ethanol, 1-Propanol, 1-Butanol, 1-Pentanol, 1-Hexanol, 2-Propanol, tert-Butanol, 3-Pentanol, 2-Propylheptanol, Cyclohexanol, Phenol oder Mischungen daraus, vorzugsweise Ethanol, 1-Propanol, 1-Butanol, 1-Pentanol, 1-Hexanol, 2-Propanol, tert-Butanol, 3-Pentanol, 2-Propylheptanol.

Der bei der Alkoxycarbonylierung eingesetzte Alkohol wird, wenn es sich um einen Monoalkohol handelt, in einem Molverhältnis zum eingesetzten Kohlenwasserstoff (Monoalkohol :
Kohlenwasserstoff) von 2 bis 20, vorzugsweise von 3 bis 10 und besonders bevorzugt von 4 bis 6 eingesetzt. Der Monoalkohol wird somit - bezogen auf den eingesetzten Kohlenwasserstoff - im molaren Überschuss hinzugefügt. Dadurch kann der Alkohol sowohl als Edukt für die Carbonylierung als auch als Lösemittel fungieren. Der bei der Alkoxycarbonylierung eingesetzte Alkohol wird, wenn es sich um einen Polyalkohol handelt, in einem Molverhältnis zum eingesetzten Kohlenwasserstoff (Kohlenwasserstoff: Polyalkohol) von 2 bis 20, vorzugsweise von 3 bis 10 und besonders bevorzugt von 4 bis 8 eingesetzt. Der Polyalkohol wird bezogen auf den eingesetzten Kohlenwasserstoff also im molaren Unterschuss hinzugefügt.

Bei beiden Reaktionen, also bei Hydroformylierung und Akoxycarbonylierung, werden homogene Katalysatorsysteme, die jeweils ein Metall aus der Gruppe 8 bis 10 des Periodensystems der Elemente (PSE) oder eine Verbindung davon und einen phosphorhaltigen Liganden umfassen.

Für die Alkoxycarbonylierung umfasst das homogene Katalysatorsystem vorzugsweise zumindest ein Metall aus der Gruppe 8 bis 10 des Periodensystems der Elemente (PSE) oder eine Verbindung davon, einen phosphorhaltigen Liganden und optional eine Säure als Co-Katalysator.

Das Metall aus der Gruppe 8 bis 10 des PSE ist vorzugsweise Palladium. Das Palladium wird bevorzugt in Form einer Vorläuferverbindung als Palladiumverbindung eingesetzt, die durch den phosphorhaltigen Liganden koordiniert wird. Beispiele für Palladiumverbindungen, die als Vorläuferverbindungen eingesetzt werden können, sind Palladiumchlorid [$PdCl_2$], Palladium(II)-Acetylacetonat [$Pd(acac)_2$], Palladium(II)-Acetat [$Pd(OAc)_2$], Dichloro-(1,5-cyclooctadien)palladium(II) [$Pd(cod)Cl_2$], Bis(dibenzylideneaceton)palladium(0) [$Pd(dba)_2$], Tris(dibenzylideneaceton)dipalladium(0) [$Pd2(dba)_3$] Bis(acetonitril)-dichloropalladium(II) [$Pd(CH_3CN)_2Cl_2$], Palladium(cinnamyl)-dichlorid [$Pd(cinnamyl)Cl_2$]. Vorzugsweise kommen die Verbindungen [$Pd(acac)_2$] oder [$Pd(OAc)_2$] zum Einsatz. Die Metallkonzentration von Palladium bei der Alkoxycarbonylierung beträgt vorzugsweise zwischen 0,01 und 0,6 Mol-%, bevorzugt zwischen 0,03 und 0,3 Mol-%, besonders bevorzugt zwischen 0,04 und 0,2 Mol-% bezogen auf die Stoffmenge des eingesetzten Kohlenwasserstoffs.

Geeignete phosphorhaltige Liganden des erfindungsgemäßen Katalysatorsystems für die Alkoxycarbonylierung weisen vorzugsweise eine Mono- oder Bidentat-Struktur, vorzugsweise eine Bidentat-Struktur auf. Bevorzugte phosphorhaltige Liganden für die das erfindungsgemäße Katalysatorsystem sind benzolbasierte Diphosphinverbindungen, wie sie beispielsweise in der EP 3 121 184 A2 offenbart worden sind. Die Liganden können in einer Vorreaktion mit dem Palladium kombiniert werden, sodass der Palladium-Ligand-Komplex zur Reaktionszone geführt wird, oder in situ zur Reaktion gegeben und dort mit dem Palladium kombiniert werden. Das Molverhältnis von Ligand : Metall kann bei der Alkoxycarbonylierung 1 : 1 bis 10 : 1, vorzugsweise 2 : 1 bis 6 : 1, besonders bevorzugt 3 : 1 bis 5 : 1 betragen.

Das homogene Katalysatorsystem umfasst vorzugsweise eine Säure, wobei es sich insbesondere um eine Brönsted- oder eine Lewis-Säure handelt. Als Lewis-Säure können insbesondere Lewis Säuren mit einem LAU-Wert von mehr als 25, vorzugsweise mit einem LAU-Wert von 29. Der LAU-Wert ist eine Methode zur Bestimmung der Stärke von Lewis-Säuren (JR Gaffen et al., Chem, Vol. 5, Issue 6, S. 1567-1583). Als Lewis-Säure werden vorzugsweise Aluminiumtriflat, Aluminiumchlorid, Aluminiumhydrid, Trimethylaluminium, Tris(pentafluorophenyl)boran, Bortrifluorid, Bortrichlorid oder Mischungen daraus eingesetzt werden. Von den genannten Lewis-Säuren wird bevorzugt Aluminiumtriflat eingesetzt. Die Lewis-Säure wird vorzugsweise in einem Molverhältnis Lewis-Säure : Ligand von 1 : 1 bis 20 : 1, vorzugsweise 2 : 1 bis 15 : 1, besonders bevorzugt 5 : 1 bis 10 : 1 hinzugegeben.

Geeignete Brönsted-Säuren haben vorzugsweise eine Säurestärke von pKs $\leq$ 5, besonders bevorzugt eine Säurestärke von pKs $\leq$ 3. Die angegebene Säurestärke pKs bezieht sich auf den bei Normalbedingungen (25°C, 1,01325 bar) bestimmten pKs-Wert. Bei einer mehrprotonigen Säure bezieht sich die Säurestärke pKs im Rahmen dieser Erfindung auf den pKs-Wert des ersten Protolyseschrittes. Die Brönsted-Säure wird vorzugsweise in einem Molverhältnis Brönsted-Säure : Ligand von 1 : 1 bis 15 : 1, vorzugsweise 2 : 1 bis 10 : 1, besonders bevorzugt 3 : 1 bis 5 : 1 hinzugegeben.

Als Brönsted-Säuren können insbesondere Perchlorsäure, Schwefelsäure, Phosphorsäure, Methylphosphonsäure oder Sulfonsäuren eingesetzt werden. Geeignete Sulfonsäuren sind beispielsweise Methansulfonsäure, Trifluormethansulfonsäure, tert-Butansulfonsäure, p-Toluolsulfonsäure (PTSA), 2-Hydroxypropan-2-sulfonsäure, 2,4,6-Trimethylbenzolsulfonsäure und Dodecylsulfonsäure. Besonders bevorzugte Säuren sind Schwefelsäure, Methansulfonsäure, Trifluormethansulfonsäure und p-Toluolsulfonsäure. Vorzugsweise handelt es sich bei der Säure um Schwefelsäure.

Die Säure als Co-Katalysator des homogenen Katalysatorsystems kann grundsätzlich die Funktion der Säure im erfindungsgemäßen Verfahren übernehmen. Wichtig ist, dass die Säure in der für das Verfahren notwendigen Menge von $\geq$ 0,1 Gew.-% vorhanden ist. Um dies zu erreichen, kann Säure noch nach der Reaktion aber vor dem Eintritt in die Membrantrennung hinzugefügt werden.

Für die Hydroformylierung umfasst das homogene Katalysatorsystem vorzugsweise ein Metall aus der 8. oder 9. Gruppe des Periodensystems der Elemente (PSE) und mindestens einen phosphorhaltigen Liganden.

Der phosphorhaltige Ligand für das Katalysatorsystem für die Hydrofomylierung weist vorzugsweise die allgemeine Formel (I)

$$R' – A – R'' – A – R''' \qquad (I)$$

wobei R', R" und R‴ jeweils organische Reste sind, mit der Maßgabe das R' und R‴ nicht identisch sind, und beide A jeweils eine brückende $-O-P(-O)_2$-Gruppe sind, wobei zwei der drei Sauerstoffatome -O-jeweils an Rest R' und den Rest R‴ gebunden sind.

In einer bevorzugten Ausführungsform sind R', R" und R‴ in der Verbindung der Formel (VI), vorzugsweise ausgewählt aus substituierten oder unsubstituierten 1,1 '-Biphenyl-, 1,1'-Binaphthyl- und ortho-Phenylgruppen, insbesondere aus substituierten oder unsubstituierten 1,1'-Biphenylgruppen, mit der Maßgabe das R' und R‴ nicht identisch sind. Besonders bevorzugt weisen die substituierten 1,1'-Biphenylgruppen in 3,3'- und/oder 5,5'-Stellung des 1,1'-Biphenylgrundkörpers eine Alkylgruppe und/oder eine Alkoxygruppe auf, insbesondere eine C1-C4-Alkylgruppe, besonders bevorzugt eine tert.-Butyl- und/oder Methylgruppe und/oder bevorzugt einen C1-C5-Alkoxgruppe, besonders bevorzugt eine Methoxygruppe.

Als Metalle können insbesondere Eisen, Iridium, Ruthenium, Cobalt oder Rhodium, vorzugsweise Cobalt oder Rhodium eingesetzt werden, wobei diese auch in Form ihrer Verbindungen als Vorläuferstufe eingesetzt werden können.

Die eingesetzten Kohlenwasserstoffe werden in Anwesenheit des jeweiligen homogenen Katalysatorsystems mit Kohlenmonoxid und einem Alkohol (Alkoxycarbonylierung) oder nur mit Synthesegas (Hydroformylierung) zur Reaktion gebracht und dadurch zu einem Ester (Alkoxycarbonylierung) oder einem Aldehyd (Hydroformylierung) umgesetzt. Die Reaktionsbedingungen sind dem Fachmann bekannt.

Das Kohlenmonoxid kann bei beiden Reaktionen direkt als Einsatzgemisch oder durch die Zugabe eines Kohlenmonoxid-haltigen Gases, ausgewählt aus Synthesegas, Wassergas, Generatorgas und anderen Kohlenmonoxid-haltigen Gasen bereitgestellt werden. Bei der Hydroformylierung wird üblicherweise Synthesegas eingesetzt. Bei der Alkoxycarbonylierung ist es auch möglich, das Kohlenmonoxid dadurch bereitzustellen, dass das Kohlenmonoxid-haltige Gas vorher in einer für den Fachmann bekannten Weise in seine Komponenten aufgetrennt wird und das Kohlenmonoxid zur Reaktionszone geleitet wird. Das Kohlenmonoxid kann dabei weiterhin einen gewissen Anteil an Wasserstoff oder anderen Gasen enthalten, weil eine vollständige Auftrennung kaum zu realisieren ist.

Durch die Alkoxycarbonylierung wird eine Reaktionslösung als Produktgemisch erhalten, welche zumindest den durch die Umsetzung gebildeten Ester, das homogene Katalysatorsystem, Leichtsieder, beispielsweise leichtsiedende Nebenprodukte wie Ether, Hochsieder, nicht umgesetzte Alkohole und nicht umgesetzte Kohlenwasserstoffe umfasst. Das Produktgemisch wird dann der nachfolgenden Membrantrennung zugeführt.

Durch die Hydroformylierung wird eine Reaktionslösung als Produktgemisch erhalten, welche zumindest den durch die Umsetzung gebildeten Aldehyd, das homogene Katalysatorsystem, Leichtsieder, Hochsieder, beispielsweise Acetale und nicht umgesetzte Kohlenwasserstoffe umfasst. Das Produktgemisch wird dann der nachfolgenden Membrantrennung zugeführt.

Beispiele:

Beispiel 1 (Referenzbeispiel)

Steigerung des Membranrückhalts für verschiedene Membranmaterialien

Die Versuche wurden in einer kommerziell erhältlichen Dead-End Batch-Filtrationszelle des Typs METcell von Evonik MET mit zwei kommerziell erhältlichen Membranen von Evonik (Evonik DuraMem 300 auf Basis von Polyimid) und Borsig (Borsig oNF-2 auf Basis von Polydimethylsiloxan) durchgeführt. Die erfindungsgemäße PEEK Membran wurde analog zur Publikation J. da Silva Burgal et al.; Journal of Membrane Science, Vol. 479 (2015), S. 105-116 (s. auch WO 2015/110843 A1) hergestellt.

Versuche wurden bei den folgenden Bedingungen gefahren: 56,7 $cm^2$ aktive Membranfläche, 20 bar Transmembrandruck, 250 U/min Rührergeschwindgkeit.

Hauptbestandteil der untersuchten Mischung sind Methanol mit 43 Gew.-% und Methyloctanoat mit 57 Gew.-%. Zur Bestimmung des Rückhalts wurde der Ligand 4,4'-Di-tert-butyl-2,2'-dipyridyl (44tB22) mit 0,01 Gew.-% dem Untersuchungsgemisch hinzugefügt. Dann wurde zunächst die eine Messung durchgeführt. Anschließend wurden 0,5 Gew.-% Aluminiumtriflat (bezogen auf das Gesamtgewicht der Mischung) als Säure hinzugegeben und die Messung von Permeabilität und Rückhalt wiederholt.

Die METcell wurde mit 200 ml der obigen Mischung befüllt, es wurde dann der Betriebsdruck aufgegeben und es wurden dann 100 ml Permeat herausgefahren und das Gewicht des Permeats kontinuierlich erfasst. Zum Ende des Versuchs, nachdem 100 ml Permeat aus der METcell durch die Membran herauspermeiert sind, wurden Proben für GC und HPLC Analytik gezogen. Die angegebene Permeabilität ist ein Mittelwert über die 100 ml gesammeltes Permeat. Nach jedem Fahren der METcell wurde das ausgefahrene Permeat wieder in die METcell gefüllt, also das Permeat wieder mit dem in der Zelle verbliebenen Retentat gemischt.

Der Rückhalt wurde per HPLC-UV auf einer C18-Säule bestimmt. Es eignet sich für die Analytik jede dem Fachmann bekannte Methode, bei welcher die Einzelkomponenten der Mischung chromatographisch zuverlässig getrennt werden und somit unterschieden werden können.

Tabelle 1: Vergleich der Permeabilität

| Beispiel | Membran | Ligand | Säure | w(Säure) | $P_{0\ (vor\ Zugabe)}$ | $P_{(nach\ Zugabe)}$ |
|---|---|---|---|---|---|---|
| - | - | | | | $L/m^2h^1bar^1$ | $L/m^2h^1bar^1$ |
| I | PEEK | 44tB22 | $Al(OTf)_3$ | 0,5 Gew.-% | 0,3 | 0,3 |
| II | Borsig oNF-2 | 44tB22 | $Al(OTf)_3$ | 0,5 Gew.-% | 0,7 | 1,6 |
| III | PuraMem S | 44tB22 | $Al(OTf)_3$ | 0,5 Gew.-% | 0,7 | 2,0 |

Tabelle 2: Vergleich des Membranrückhaltes

| Beispiel | Membran | Ligand | Säure | w(Säure) | $R_{0(vor\ Zugabe)}$ | $R_{(nach\ Zugabe)}$ |
|---|---|---|---|---|---|---|
| | | | | | % | % |
| I | PEEK | 44tB22 | $Al(OTf)_3$ | 0,5 Gew.-% | 54 | 81 |
| II | Borsig oNF-2 | 44tB22 | $Al(OTf)_3$ | 0,5 Gew.-% | 20 | 94 |
| III | PuraMem S | 44tB22 | $Al(OTf)_3$ | 0,5 Gew.-% | 57 | 78 |

Den Beispielen ist eindeutig zu entnehmen, dass durch die Zugabe einer Säure unabhängig vom eingesetzten Membranmaterial der Membranrückhalt gesteigert werden konnte. Während die Permeabilität bei den Membranen des Typs oNF-2 und PuraMem S zunächst prinzipiell vorteilhaft ansteigt, deuten sich langfristig Stabilitätsprobleme an. Die PEEK Membran zeigt sowohl einen erheblichen Anstieg des Rückhalts der zurückzuhaltenden Komponente als auch

eine akzeptable Permeabilität, die sich durch die Säurezugabe nicht wesentlich ändert.

Beispiel 2

Steigerung des Membranrückhalts für verschiedene Phosphin-Liganden mit PEEK-Membran

Die Versuche wurden in einer durchgehend betriebenen Versuchsanlage mit vollständiger Rückführung des Permeats im geschlossenen Kreislauf durchgeführt. Im Kern besteht die Anlage aus einem auf bis zu 60 bar bedrückbaren, überströmten Hochdruckkreislauf mit einer Flachkanal-Membranzelle. Der Kreislauf wird aus einer mit Feedlösung gefüllten, mechanisch durchmischten und mit Argon überschleierten Vorlage gespeist. Mittels HPLC-Pumpe wird die Feedlösung auf den Betriebsdruck des Membrankreislaufs und somit in den Hochdruckbereich der Versuchsanlage gebracht. Der Hochdruckbereich der Versuchsanlage besteht im Wesentlichen aus einem Flüssigkeitskreislauf, der über eine Kreislaufpumpe betrieben wird, und einer Flachmembrantestzelle sowie der benötigten Sensorik (z.B. Druckmessung, Temperaturmessung). Aus dem Membranmodul wird der durch die Membran dringende Flüssigkeitsstrom als Permeat abgeführt und wieder der Vorlage zugeführt. Die Permeatmenge wird per Waage gemessen. Die überschüssige Feedmenge (Förderstrom der Hochdruckpumpe minus Summe des Permeats der Membran) wird ebenfalls zurück in die Vorlage geführt. Diese Rückführung erfolgt über einen mechanischen Vordruckregler, mit dem auch der Vordruck der Nanofiltrationsstufe eingestellt wird. Der Kreislauf wird durch einen Thermostaten beheizt, sodass eine definierte Temperatur für die Trennung gewährleistet wird.

Die Versuche wurden bei den folgenden Bedingungen gefahren: 84,5 $cm^2$ aktive Membranfläche, 45 bar Transmembrandruck, 50 °C Separationstemperatur. Als Membranmaterial wurde PEEK (Hergestellt analog Beispiel 1) eingesetzt.

Eine Feedlösung bestehend aus 43 Gew.-% Methanol und 57 Gew.-% Methyloctanoat (molares Verhältnis 4:1) wurde untersucht. Zur Bestimmung des Rückhalts wurden je 0,1 Gew.-% der in Tabelle 3 gelisteten Phosphinliganden eingesetzt. Dann wurde zunächst der Rückhalt für die Liganden über einen Zeitraum von 70h bestimmt. Anschließend wurden 0,5 Gew.-% Aluminiumtriflat (bezogen auf das Gesamtgewicht der Mischung) als Säure hinzugegeben und die Messung des Rückhalts wiederholt. Der Rückhalt der Liganden wurde per HPLC mit UV-Detektor (220 nm) auf einer $C_{18}$-Säule bestimmt.

Tabelle 3: Vergleich des Rückhalts verschiedener Phosphinliganden mit Aluminiumtriflat

| Beispiel | Ligand | | $R_{0(vor\ Zugabe)}$ | $R_{(nach\ Zugabe)}$ |
|---|---|---|---|---|
| | | | % | % |
| IV | Diphenyl(2-pyridinyl)phosphine | 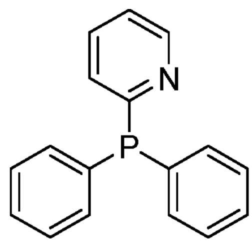 | 60 | 85 |
| V | 1,2-Bis(2-Pyridyl,tertbutylphosphinomethyl) benzol | 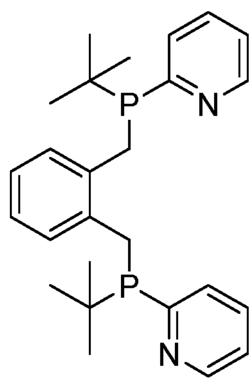 | 80 | 92 |

(fortgesetzt)

| Beispiel | Ligand | | $R_{0(vor Zugabe)}$ | $R_{(nach Zugabe)}$ |
|---|---|---|---|---|
| | | | % | % |
| VI | 1,1-Bis(2-Pyridyl,tertbutylphosphinomethyl) ferrocen | 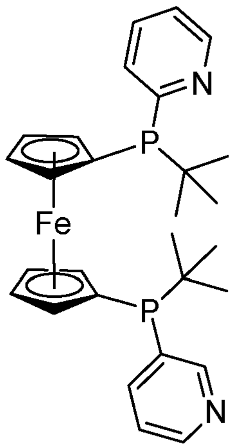 | 80 | 95 |
| VII | 2,6-Bis(di-tert-butylphosphinomethyl)pyridin | 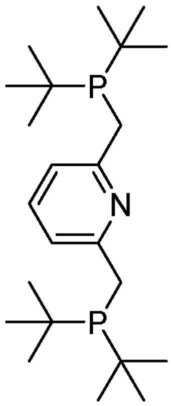 | 80 | 99 |

An Tabelle 3 ist zu sehen, dass unabhängig von der Ligandenstruktur und der Anzahl der Phosphorzentren eine Steigerung des Rückhalts nach Säurezugabe erfolgt.

Beispiel 3

Die gesamte Versuchsdurchführung wurde analog zu Beispiel 2 unter Zusatz von Schwefelsäure anstatt von Aluminiumtriflat wiederholt. Die Ergebnisse sind in Tabelle 4 zu finden.

Tabelle 4: Vergleich des Rückhalts verschiedener Phosphinliganden mit Schwefelsäure

| Beispiel | Ligand | | $R_{0(vor Zugabe)}$ | $R_{(nach Zugabe)}$ |
|---|---|---|---|---|
| | | | % | % |
| IV | Diphenyl(2-pyridinyl)phosphine | 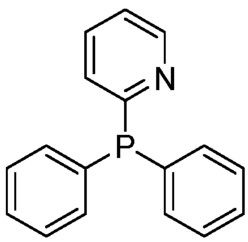 | 59 | 84 |

(fortgesetzt)

| Beispiel | Ligand | | $R_{0(\text{vor Zugabe})}$ | $R_{(\text{nach Zugabe})}$ |
|---|---|---|---|---|
| | | | % | % |
| V | 1,2-Bis(2-Pyridyl,tertbutylphosphinomethyl) benzol | 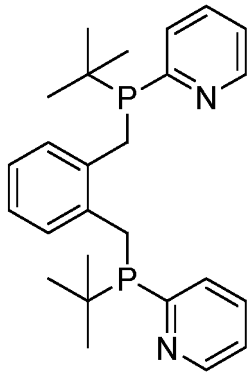 | 80 | 93 |
| VI | 1,1-Bis(2-Pyridyl,tertbutylphosphinomethyl) ferrocen | 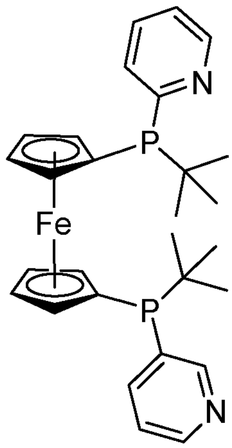 | 79 | 95 |
| VII | 2,6-Bis(di-tert-butylphosphinomethyl)pyridin | 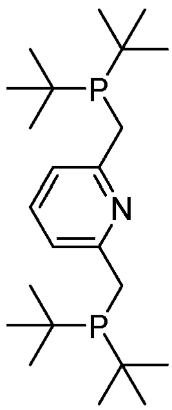 | 81 | 99 |

An Tabelle 4 ist zu erkennen, dass einer Steigerung des Liganden Rückhalts im selben Maße für Schwefelsäure stattfindet.

## Patentansprüche

1. Verfahren zur Abtrennung eines homogenen Katalysatorsystems, welches zumindest ein Metall der Gruppe 8 bis 10 des Periodensystems der Elemente oder einer Verbindung davon und einen phosphorhaltigen Liganden umfasst, aus eine Reaktionslösung mittels einer Membrantrennung, wodurch das homogene Katalysatorsystem im resultierenden Permeatstrom abgereichert und im resultierenden Retentatstrom angereichert wird, wobei mindestens eine Komponente des homogenen Katalysatorsystems mindestens eine basische funktionelle Gruppe umfasst, **dadurch gekennzeichnet, dass**
die Reaktionslösung vor der Membrantrennung, eine Säure in einer Menge von ≥ 0,1 Gew.-%, vorzugsweise in einer Menge von ≥ 0,1 Gew.-% und < 5 Gew.-%, bezogen auf das Gesamtgewicht des Gemisches enthält.

**2.** Verfahren nach Anspruch 1, wobei die Säure eine Brönsted-Säure mit einem pKs ≤ 5, vorzugsweise mit einem pKs ≤ 3 oder eine Lewis-Säure mit einem LAU-Wert von mehr als 25, vorzugsweise mit einem LAU-Wert von 29 ist

**3.** Verfahren nach Anspruch 1 oder 2, wobei die Säure eine Brönsted- oder Lewis-Säure ist, wobei die Brönsted-Säure Perchlorsäure, Schwefelsäure, Phosphorsäure, Methylphosphonsäure oder eine Sulfonsäure ist und wobei die Lewis-Säure Aluminiumtriflat, Aluminiumchlorid, Aluminiumhydrid, Trimethylaluminium, Tris(pentafluorophenyl)boran, Bortrifluorid, Bortrichlorid, Titan(IV)-isopropoxid, $Bu_2SnO$, BuSn(O)OH oder eine Mischung davon ist..

**4.** Verfahren nach einem der vorhergehenden Ansprüche, wobei der phosphorhaltige Ligand des homogenen Katalysatorsystems eine Mono- oder Bidentat-Struktur aufweist.

**5.** Verfahren nach einem der vorhergehenden Ansprüche, wobei der phosphorhaltige Ligand benzolbasierte Diphosphinverbindung ist.

**6.** Verfahren nach einem der vorhergehenden Ansprüche, wobei bei der Membrantrennung ein keramisches Membranmaterial eingesetzt wird.

**7.** Verfahren nach Anspruch 6, wobei das keramische Membranmaterial Aluminiumoxid, $SiO_2$, TiOz, $ZrO_2$ oder Mischungen dieser Materialien umfasst oder daraus besteht.

**8.** Verfahren nach einem der vorhergehenden Ansprüche, wobei bei der Membrantrennung ein polymerbasiertes Membranmaterial eingesetzt wird und, wobei das polymerbasierte Membranmaterial zumindest eine trennaktive Schicht aufweist.

**9.** Verfahren nach Anspruch 8, wobei das polymerbasierte Membranmaterial als trennaktive Schicht ein Material umfasst, welches aus der Gruppe, bestehend aus Polyimid (PI), Polydimethylsiloxan (PDMS), Polyetherimid (PEI), Poly(2,6-dimethyl-1,4-phenyleneoxid (PPO), Polyvinylalkohol (PVA), Polyacrylsäure (PAA), Polyurethane (PU), Poly(1-trimethylsilyl-1-propyne) (PTMSP), Polybenzimidazole (PBI), Polydicyclopentadiene (pDCPD), Polyaryetherketone (PAEK) und Mischungen dieser Materialien ausgewählt ist.

**10.** Verfahren nach Anspruch 8 oder 9, wobei die trennaktive Schicht aus einem PAEK-Polymer besteht.

**11.** Verfahren nach Anspruch 10, wobei die trennaktive Schicht aus PEEK besteht, vorzugsweise mit einem Sulfonierungsgrad von weniger als 20%, vorzugsweise weniger als 10%.

**12.** Verfahren nach einem der vorhergehenden Ansprüche, wobei die Reaktionslösung einer Alkoxycarbonylierung entstammt, bei der ein C2- bis C20-Kohlenwasserstoff und mit mindestens einer olefinischen Doppelbindung mit einem Alkohol und Kohlenmonoxid in Anwesenheit des homogenen Katalysatorsystems umgesetzt wird.

**13.** Verfahren nach Anspruch 12, wobei der bei Alkoxycarbonylierung eingesetzte Alkohol ein Mono- oder Polyalkohol (zwei oder mehr OH-Gruppen) mit 1 bis 50 Kohlenstoffatomen oder eine Mischung aus zwei oder mehr Mono- und/oder Polyalkoholen ist

## Claims

**1.** Process for separating a homogeneous catalyst system that contains at least one metal from groups 8 to 10 of the periodic table of the elements or a compound thereof, and a phosphorus-containing ligand, from a reaction solution by a membrane separation that results in the homogeneous catalyst system becoming depleted in the resulting permeate stream and enriched in the resulting retentate stream, wherein at least one component of the homogeneous catalyst system contains at least one basic functional group, **characterized in that**

the reaction solution prior to the membrane separation contains an acid in an amount of ≥ 0.1% by weight, preferably in an amount of ≥ 0.1% by weight and < 5% by weight, based on the total weight of the mixture.

**2.** Process according to Claim 1, wherein the acid is a Bronsted acid having a pKa of ≤ 5, preferably having a pKa of ≤ 3, or a Lewis acid having an LAU value of more than 25, preferably having an LAU value of 29.

**3.** Process according to Claim 1 or 2, wherein the acid is a Bronsted or Lewis acid, the Bronsted acid being perchloric acid, sulfuric acid, phosphoric acid, methylphosphonic acid or a sulfonic acid and the Lewis acid being aluminium triflate, aluminium chloride, aluminium hydride, trimethylaluminium, tris(pentaflurophenyl)borane, boron trifluoride, boron trichloride, titanium(IV) isopropoxide, $Bu_2SnO$, BuSn(O)OH, or a mixture thereof.

**4.** Process according to any of the preceding claims, wherein the phosphorus-containing ligand of the homogeneous catalyst system has a mono- or bidentate structure.

**5.** Process according to any of the preceding claims, wherein the phosphorus-containing ligand is a benzene-based diphosphine compound.

**6.** Process according to any of the preceding claims, wherein a ceramic membrane material is used in the membrane separation.

**7.** Process according to Claim 6, wherein the ceramic membrane material comprises or consists of aluminium oxide, $SiO_2$, $TiO_2$, $ZrO_2$ or mixtures of these materials.

**8.** Process according to any of the preceding claims, wherein a polymer-based membrane material is used in the membrane separation and wherein the polymer-based membrane material includes at least one separation-active layer.

**9.** Process according to Claim 8, wherein the polymer-based membrane material as the separation-active layer includes a material selected from the group consisting of polyimide (PI), polydimethylsiloxane (PDMS), polyetherimide (PEI), poly(2,6-dimethyl-1,4-phenylene oxide) (PPO), polyvinyl alcohol (PVA), polyacrylic acid (PAA), polyurethanes (PU), poly(1-trimethylsilyl-1-propyne) (PTMSP), polybenzimidazoles (PBI), polydicyclopentadienes (pDCPD), polyaryl ether ketones (PAEK) and mixtures of these materials.

**10.** Process according to Claim 8 or 9, wherein the separation-active layer is composed of a PAEK polymer.

**11.** Process according to Claim 10, wherein the separation-active layer is composed of PEEK, preferably having a degree of sulfonation of less than 20%, preferably less than 10%.

**12.** Process according to any of the preceding claims, wherein the reaction solution originates from an alkoxycarbonylation in which a C2 to C20 hydrocarbon having at least one olefinic double bond is reacted with an alcohol and carbon monoxide in the presence of the homogeneous catalyst system.

**13.** Process according to Claim 12, wherein the alcohol used in the alkoxycarbonylation is a mono- or polyol (two or more OH groups) having 1 to 50 carbon atoms or a mixture of two or more mono- and/or polyols.

## Revendications

**1.** Procédé pour séparer un système catalytique homogène, qui comprend au moins un métal des groupes 8 à 10 du système périodique des éléments ou un de ses composés et un ligand contenant du phosphore, d'une solution réactionnelle au moyen d'une séparation membranaire, par quoi le système catalytique homogène est appauvri dans le flux de perméat résultant et enrichi dans le flux de rétentat résultant, dans lequel au moins un composant du système catalytique homogène comprend au moins un groupe fonctionnel basique, **caractérisé en ce que** la solution réactionnelle avant la séparation membranaire, contient un acide en une quantité ≥ 0,1 % en poids, de préférence en une quantité ≥ 0,1 % en poids et < 5 % en poids, par rapport au poids total du mélange.

**2.** Procédé selon la revendication 1, dans lequel l'acide est un acide de Brönsted doté d'un pKs ≤ 5, de préférence doté d'un pKs ≤ 3 ou un acide de Lewis doté d'une valeur LAU supérieure à 25, de préférence doté d'une valeur LAU de 29.

**3.** Procédé selon la revendication 1 ou 2, dans lequel l'acide est un acide de Brönsted ou un acide de Lewis, l'acide de Brönsted étant l'acide perchlorique, l'acide sulfurique, l'acide phosphorique, l'acide méthylphosphonique ou un acide sulfonique et l'acide de Lewis étant le triflate d'aluminium, le chlorure d'aluminium, l'hydrure d'aluminium, le triméthylaluminium, le tris(pentafluorophényl)borane, le trifluorure de bore, le trichlorure de bore, l'isopropoxyde de titane(IV), $Bu_2SnO$, BuSn(O)OH ou un mélange de ceux-ci.

**4.** Procédé selon l'une quelconque des revendications précédentes, dans lequel le ligand contenant du phosphore du système catalytique homogène présente une structure monodentée ou bidentée.

**5.** Procédé selon l'une quelconque des revendications précédentes, dans lequel le ligand contenant du phosphore est un composé diphosphine à base de benzène.

**6.** Procédé selon l'une quelconque des revendications précédentes, dans lequel un matériau de membrane céramique est utilisé dans la séparation membranaire.

**7.** Procédé selon la revendication 6, dans lequel le matériau de membrane céramique comprend ou est constitué d'oxyde d'aluminium, de $SiO_2$, de $TiO_2$, de $ZrO_2$ ou de mélanges de ces matériaux.

**8.** Procédé selon l'une quelconque des revendications précédentes, dans lequel un matériau membranaire à base de polymère est utilisé dans la séparation membranaire et dans lequel le matériau membranaire à base de polymère présente au moins une couche active de séparation.

**9.** Procédé selon la revendication 8, dans lequel le matériau membranaire à base de polymère comprend, comme couche active de séparation, un matériau qui est choisi dans le groupe constitué par du polyimide (PI), du polydiméthylsiloxane (PDMS), du polyétherimide (PEI), du poly(oxyde de 2,6-diméthyl-1,4-phénylène) (PPO), du poly(alcool vinylique) (PVA), du poly(acide acrylique) (PAA), des polyuréthanes (PU), du poly(1-triméthylsilyl-1-propyne) (PTMSP), des polybenzimidazoles (PBI), des polydicyclopentadiènes (pDCPD), des polyaryléthercétones (PAEK) et des mélanges de ces matériaux.

**10.** Procédé selon la revendication 8 ou 9, dans lequel la couche active de séparation est constituée d'un polymère PAEK.

**11.** Procédé selon la revendication 10, dans lequel la couche active de séparation est constituée de PEEK, de préférence doté d'un degré de sulfonation inférieur à 20 %, de préférence inférieur à 10 %.

**12.** Procédé selon l'une quelconque des revendications précédentes, dans lequel la solution réactionnelle est issue d'une alcoxycarbonylation dans laquelle un hydrocarbure en $C_2$-$C_{20}$ comportant au moins une double liaison oléfinique, est mis à réagir avec un alcool et du monoxyde de carbone en présence du système catalytique homogène.

**13.** Procédé selon la revendication 12, dans lequel l'alcool utilisé dans l'alcoxycarbonylation est un monoalcool ou un polyol (deux groupes OH ou plus) comportant 1 à 50 atomes de carbone ou un mélange de deux monoalcools et/ou polyols ou plus.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102013107911 A1
- WO 2013107902 A1
- WO 2015110843 A1
- EP 3121184 A2


### In der Beschreibung aufgeführte Nicht-Patentliteratur


- **J. DA SILVA BURGAL et al.** *Journal of Membrane Science,* 2015, vol. 479, 105-116